# EUROPEAN PATENT SPECIFICATION

(11) **EP 0 605 834 B1**
(45) Date of publication and mention of the grant of the patent: **24.02.1999**
(21) Application number: 93120478.8
(22) Date of filing: 18.12.1993
(51) Int. Cl.: G06T 7/20

(54) **Method for estimating motion from a video signal, and motion estimator**
Verfahren zur Bestimmung der Bewegung aus einem Videosignal und Bewegungseinschätzer
Méthode d'estimation du mouvement à partir d'un signal vidéo et estimateur de mouvement

(30) Priority: 31.12.1992 FI 925990
(43) Date of publication of application: 13.07.1994
(73) Proprietor: NOKIA TECHNOLOGY GmbH, 75175 Pforzheim (DE)
(72) Inventor: Salonen, Jouni, SF-33820 Tampere (FI); Koivunen, Tero, SF-33720 Tampere (FI)

(56) References cited:
- EP-A- 0 466 981
- EP-A- 0 535 746
- "Optimal stack filtering and the estimation and structural approaches to image processing", Coyle et al., IEEE Trans. acoustics, speech and signal processing, vol 37, no. 12 december 1989
- "An overview of median and stack filtering", Gabbouj et al., Circuit systems signal process, Vol. 11, no.1, 1992

## Description

The present invention relates to a method and an estimator, with which, with the use of block matching, motion information of the parts of a television picture are estimated from a sampled video signal, said information being obtained in the form of a motion vector providing the direction and extent of the motion. The method and the estimator are appropriate for use in a receiver when received video signal, according to e.g. HD-MAC, PAL, etc. standard, is processed with a motion-compensated method, and particularly when Line Rate Upconversion and Field Rate Upconversion are accomplished in order to improve the picture to be displayed. The estimator may also be used in transformations from one standard into another.

The motion estimation methods can be divided into two main classes: methods in which motion parameters are extracted and methods in which the pixel velocity is measured. The methods measuring the pixel velocity can further be divided into methods based on spatial-temporal differentials, into matching, in which the equivalences of blocks are analysed at different points of time, and into Fourier techniques.

In the motion parameter extraction methods, movement is described with the aid of parameter terms, such as translation, rotation and zooming. Said parameters have been extracted from a sequence of moving two-dimensional objects. The characteristic features can be extracted either manually or by using high-pass or morphological filtering. Because of their imaging limitations and complexity, the methods for extracting motion parameters are not particularly well appropriate for motion estimation in a television.

The techniques based on spatial-temporal differentials, included in the methods measuring the pixel rate, are solely based on translational models. In those methods such assumption is made that the intensity variation is, across a television field a linear function of displacement. More complex movement can be estimated by delimiting the estimation area to concern a block. It is also essential to assume that there are no changes in the brightness of a moving object. In temporal direction (between consecutive frames), and in horizontal and vertical directions a great number of differentials are calculated. These differential ratios provide a spatial displacement, in units of pixels per frame.

Such techniques based on differentials function well when the motion is insignificant, i.e. the displacements are lesser than a pixel, whereas they function poorly when the motion is large. They can be enhanced by the use of recursion, but the convergence may be slow or it may not exist.

In the Fourier techniques, the correlation of two pictures is used in that, firstly, a two-dimensional Fourier transform is performed for each picture, the equivalent frequency components are multiplied, and an inverse transform is performed. As a result, a correlation surface is produced with a peak at the coordinates corresponding to the shift between two pictures. The Fourier technique is not affected by changes in brightness, and it has a good noise immunity. The method is well suited for measuring global motion, and using some additional processing, such as interpolation of the correlation surface and afterprocessing, accuracy may be improved even more.

A frequently used modification of the methods measuring the pixel rate is block matching, the estimation wherein being accomplished region by region instead of pixel by pixel.

In the discussion below in the text, the word "frame" refers to both a field of an interlaced picture and a frame of a progressive picture, the latter one meaning the same as the picture. In block matching, the frames have been divided into blocks, the size thereof being n*m, and with such assumption that the displacement vector of each pixel is the same within the block. An example illustrates the block matching: let us assume that one frame t comprises an object within a block containing n*m pixels, e.g. a picture of a car. Such block can be called a reference block. The car is moving and in a subsequent frame t+1 it has moved to a new location. The new location must now be found. It is carried out so that in the new frame t+1 a search area is defined in which a block is moved, said block being of the same size as the reference block, i.e. n*m pixels. Said block can be figured out to be a window wherethrough the pixel set of the frame can be seen in an area of the size of the window. In each location the contents of the block (= window) are compared with the contents of the reference block of the frame t. In the comparison, the pixels of the window are compared with the corresponding pixels of the reference block of the frame t. When the block (window) is moved along the frame t+1, at some point of the frame t+1, a given reference criterion condition is met, which is so interpreted that the contents of the blocks are identical. Now, the blocks "match" with each other because the contents thereof are identical. We know now that the car has moved to this point in the frame t+1. In this manner the magnitude and direction of the displacement can be determined.

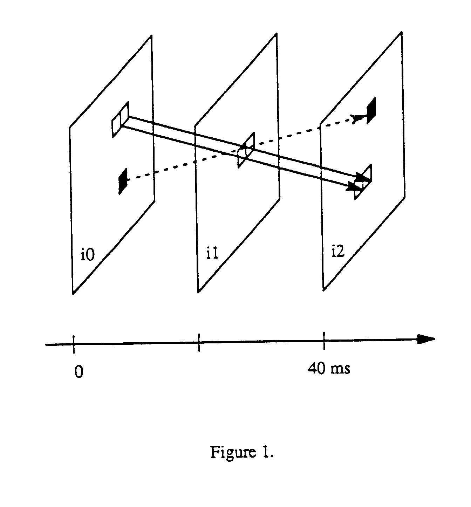

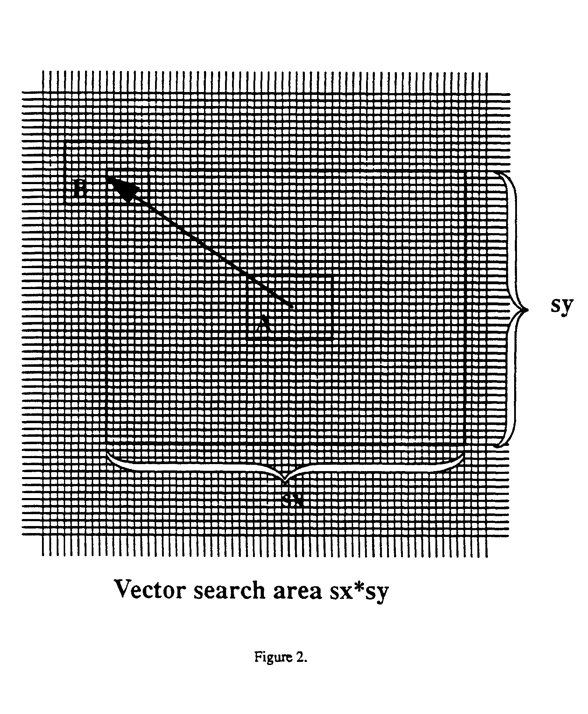

Figs 1 and 2 present the principle of block matching. In Fig. 1 the rectangle on the left illustrates one frame t of a television picture, and the rectangle on the right a subsequent frame t+1. As mentioned above, each frame is divided into n*m pixel-sized blocks. Frame t presents three of such blocks. The picture presented thereby has moved to another location in frame t+1 showing the tips of the vectors. Reference is next made to Fig. 2. The block matching is accomplished so that a search area sx*sy is selected in the frame t+1, the block in the middle whereof being in the same position as the reference block in frame t. For simplicity's sake, it is imagined that the block is reference block A. In the block matching the area sx*sy of frame t+1 is searched by gliding a window B of precisely the size of block A in the area. In each position of the window the contents of the window are compared to the contents of block A in frame t. When the contents meet the criterion preset, it is stated that the blocks "match" with one another. Thus, the arrow in Fig. 2 illustrates the motion of block A from frame t to frame t+1.

Respectively, in Fig. 1 it is presented that the picture contents of the block marked with black in the frame t have moved to a location marked with black in the frame t+1. The x and y coordinates of said point are the coordinates of the motion vector. Similarly, it is found that the picture of two adjacent blocks of frame t , depicted with a white square, has moved to a location in frame t+1, which the tips of the vectors point to. When for increasing the field rate, a new frame i1 must be interpolated between frames t and t+1, it is found that the motion vectors pass through the same point of frame i1. Now, a consistency check has to be carried out so that for the direction of the motion vector of this point becomes the direction of the motion vectors depicted with a whole line, this being the main direction of the motion in the picture.

The commonly used reference criteria in block matching are the Mean Absolute Difference MAD of the pixels of the blocks, the Mean Squared Difference MSD, and the Pixel Difference Classification PDC. In the last mentioned criterion the usefulness of each pixel of a block is analysed, i.e. by using a threshold value it is studied if the value thereof is the same as the corresponding value of the pixel of the reference block. If it is, the pixel is classified as being "matching", if not, as "mismatching". The upper limit for the block size is set by a simple translational model used, because rotation and zooming are not easy to model.

As described above, a matching criterion has to be used in the block matching method, according to which the block is interpreted to have been matched. By the use of a matching criterion, a motion vector field can be produced. However, the matching criteria known in the block matching do not always produce a precise motion vector field. The objective of the present invention is thus to produce a motion estimator in which by utilizing block matching, the direction and magnitude of the motion vector can be determined very reliably. This aim is achieved with the method according to claim 1 or with a motion estimator according to claim 9.

In the present method, a simple motion detection is first carried out in any manner known in the art, in order to find out the stationary blocks. By the aid of this operation a lot of calculation can be saved because now it is possible to concentrate on analysing the motion vectors of blocks containing nothing but motion. Thereafter for each block a number of motion vector candidates associated therewith are searched. This is carried out in that a whole search area is divided into interlaced zones, a reference block being located in the middle thereof. One of the useful shapes for the zone is circular, whereby all directions become equally emphasized. If the shape is e.g. square, the directions of the angular areas become emphasized too much. In the first, that is smallest, zone a block matching operation is carried out for the quantized pixels, and the motion vector values x and y concerning the zone, as well as the equivalent matching calculation are stored. Thereafter, the circular zone is enlarged if the matching is better than in a preceding smaller zone. The same process is repeated for each zone. Since the zones are interlaced, the same vectors may be included in several zones, and a good matching close to the origin, requiring small displacement, may proceed through all of the zones.

After calculating the motion vector candidates for one block, a next one is picked, etc., until the vector candidates for all motion-containing blocks of one picture or at least of a sufficiently large area have been calculated. Therefore, a great number of vector candidates always exist for each moving block, which can be but which do not have to be equal in size.

Next follows a vector postprocessing phase for selecting the best motion vector. In order to obtain a united final vector field, also the vector candidates of the adjacent blocks are considered in determining the final motion vector for each block. In the first step, all vector candidates of the block under study and the neigbouring blocks, being in x and y component form, are inserted in stack filters. Thereafter the contents of the stacks is organized and a median is assessed for each search zone.

The zone consistency vectors thus obtained, being equal in number with the search zones, are conducted to other stack filters with a height equal to the number of the zones. Thereafter, the median is again assessed. The median thus obtained is accepted for the final motion vector of the block to be analysed.

In a preferred embodiment, another vector processing operation is carried out for smoothing the vector field. The operation of the other afterprocessing approaches to the operation of the first afterprocessing.

The "final" vectors of the block under study and of the adjacent blocks thereof obtained in the above manner are stacked, arranged, and a median is assessed for the final motion vector.

The method and the estimator according to the invention is described below more closely with the aid of the annexed drawings, in which
Fig. 1 presents the principle of block matching,
Fig. 2 presents the general principle of searching,
Fig. 3 illustrates search areas in the method according to the invention,
Fig. 4 presents a group of 3*3 sized blocks, for which the motion vector candidates have been calculated,
Fig. 5 is a schematic diagram of a first vector after-processing phase,
Fig. 6 shows a 3*3 block, in the blocks whereof the motion vectors obtained after the phase shown in Fig. 5 are depicted,
Fig. 7 is a schematic diagram of a second vector afterprocessing phase, and
Fig. 8 is a block diagram of a circuit for field uprate.

Figs 1 and 2 are described above in association with the prior art description. In the present block matching, the PDC method is adapted in a quantized video signal in which the matching pixels must be equal in size. The number of the quantization levels is variable, meaning that a good matching can be obtained with the method also in noisy-filled circumstances. Typically, a noisy video signal has been quantized using four- or five-bit quantization, resulting in 16 or 32 levels. When the original video signal usually contains 8 bits, i.e. it is of 255 grey-levels, the 5 bit quantization means that between consecutive 5-bit numbers 8 original grey levels can be inserted. Now, when the difference between two pixels is below 8, the value of the pixels is interpreted to be the same. This means that quantization also improves the noise-resistance of the system.

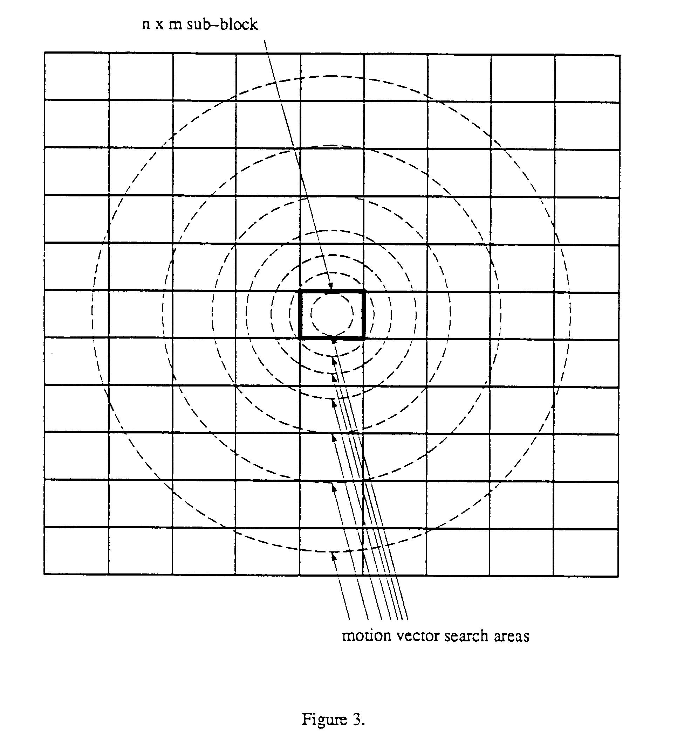

Fig. 3, the idea thereof corresponding to Fig. 2, presents search areas in the method of the invention. The figure can be thought of being part of frame t+1. The frame the pixels of which have been quantized, has been divided into blocks of n*m size, depicted by rectangels defining one another. The rectangle in the middle, with bold line, presents a reference block derived from a preceding frame t. In the present instance, one motion vector search area is not used, as being a convention in the state of art, instead, the search area consists of a plurality of circular zones, as seven in the figure, so that in the middle of a circular zone there is a reference block, and the circular zones are therefore interlaced. The radius of the largest circle is determined by the maximum motion vector size available, i.e. the longer maximum vector, the greater the number of the zones.

First, a block matching is carried out in the smallest zone. A block (a window) is moved in said zone, as described in association with the description of Fig. 2. In each position of the block each quantized pixel of the block is compared with an equivalent quantized pixel of the reference block in the middle of the frame. Thus an n*m comparison is accomplished. Each time it is indicated in the comparison that the pixel pairs are equal in size, a matchcount is incremented. When a comparison in that position has been finished, a given counter number N is achieved, called match count. This and the x and y coordinates of the block are stored in the memory. The window block is moved in the zone by one index (line or column), and again, the number of equal-sized pixel pairs is again counted, that is, a new matching count N in this position. If N is greater than the number N in the memory, meaning a better matching, the preceding number of the counter stored in the memory is replaced by this number and similarly, the x and y coordinates stored in the memory are replaced by the coordinates of said block provided with a better matching. In this manner, the entire area of the circular zone is gone through, and when the matching is over, it results in the coordinates x and y of the motion vector candidate of block A as well as the number N of the matching pixels in the first circular zone.

Thereafter the search area is enlarged to comprise a second circular zone. The window block is moved in equal fashion as within the range of the first zone, and at each point, the counting of pixel pairs of equal value is repeated. After going through the entire zone, the coordinates x and y of the motion vector candidate of block A are obtained as a result. The result thus obtained can be exactly the same as in the first zone.

The search area is again widened to comprise a third zone, thereafter a fourth, etc., until all zones have been gone through. For each zone, the vector values x and y are stored, and the respective matchcount N. Because the zones are interlaced, the one and same vector can meet the matching criterion in a number of zones; thus, this same vector may occur as a vector candidate for several zones. Therefore, a great number of vector candidates may thus be available for each moving block, which can but which do not have to be equal in size.

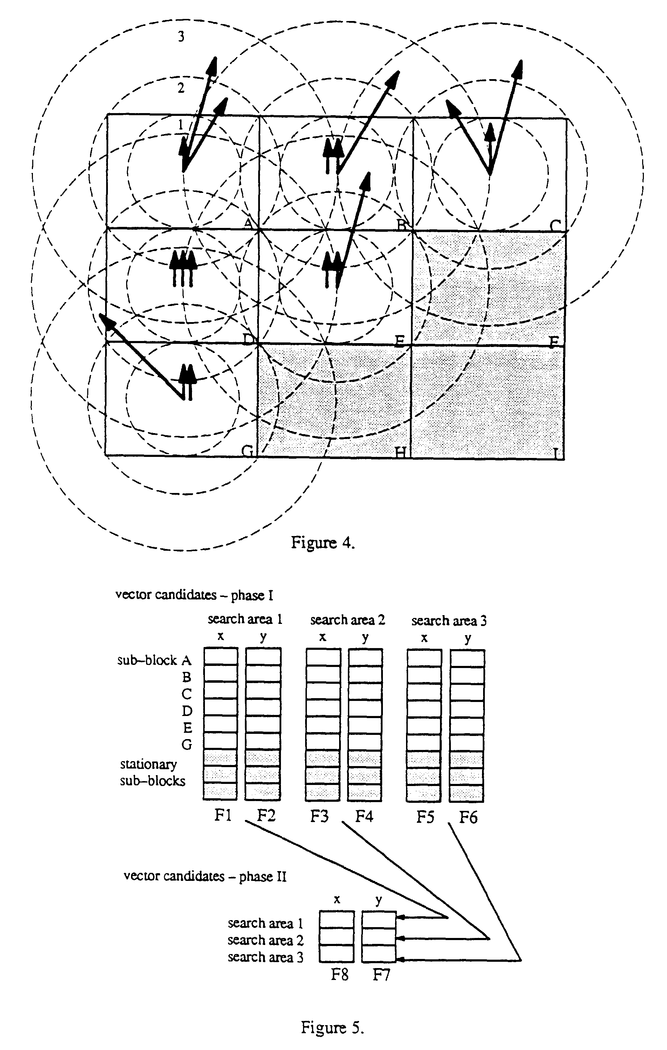

After the operation described above has been carried out for each motion-containing block of frame t, the result is as shown in Fig. 4. It shows a 3*3 block group, that is, blocks A, B, C, D, E, F, G, H, and I. Since the blocks E, H and I, marked in grey, have been found stationary in the operation prior to block matching, no block matching has been carried out for them, neither do they have any motion vectors. As shown in the figure, three pieces of search zones have been in use, so that for each block three motion vector candidates are available. Next, one final motion vector must be appointed for each zone. It is decsribed below how a final motion vector for block E is determined.

In order to provide an even vector field of a television picture such that no individual, obviously incorrect motion vectors would occur therein, a vector afterprocessing will be carried out for the selection of the best vector. Reference is made to Figs 4 and 5. In addition to the vector candidates of block E being studied, at least the vector candidates of the immediately adjacent blocks thereof are taken into consideration, as shown in Fig. 4. In the first phase, all vector candidates of the 3x3 block are stacked in stack filters F1, F2, F3, F4, F5, and F6. The number of filters is dependent on the number of the circular zones. If there are three zones, as in Fig. 4, six stack filters are needed. The vector components x and y are processed in separation. The maximum height of the stacks conforms to the number of blocks, as in the present instance, each stack including nine locations. In a first afterprocessing phase, the vector candidates from each zone are placed (zone 1 is thus search area 1) in stack. The x and y components are provided with a stack of their own. E.g. the 1 x vector candidates of the search area of each block are included in the stack of filter F1, and the y vector candidates of said area are included in the stack of filter F2. Respectively, the 2 x and y vector candidates of the search area of each block are included in stacks F3 and F4, and the x and y vector candidates of the search area 3 are included in stacks F3 and F4. Three locations in each stack are empty because the blocks F, H and I are stationary.

Thereafter, the contents of the stacks are arranged and a median of the values of each stack is assessed. Now, we have consistent vectors for block E search zone by search zone on an area comprising the adjacency of the 3x3 block. The consistency vectors of the zones, that is, medians, are conducted into additional stacks F7 and F8, the height thereof being equal to the number of the zones, here three.

To stack F7 the y consistency vector of each three zones is condcuted, respectively, to stack F8 the x consistency vector of each zone. Thereafter, a median is assessed for both stacks. Such motion vector components X and Y are obtained which can be used for the final motion vector components for block E.

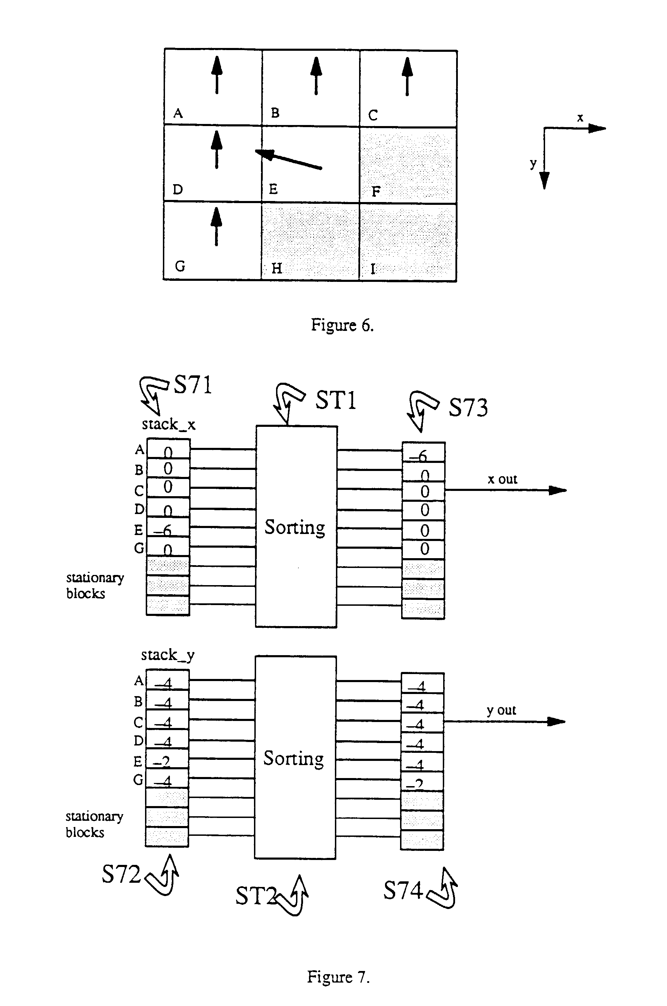

Fig. 6 presents the 3*3 block of Fig. 4, the motion vector of each block whereof being calculated by making use of the vector candidates of the neighbouring candidates in the consistency check as described above.

It is usually however preferable to carry out one more smoothing operation. It is presented in Fig. 7. The functioning of said second afterprocessing approaches the functioning of the first afterprocessing described above. The x components of the motion vectors of the blocks A, B, C, D, E, and G of the 3x3 window are stacked in a stack memory S71 and arranged in arrangement block ST1 in the order of magnitude into stack S73. From the values of the stack a median is assessed, this being a final x component Xout of the motion vector for block E. Respectively, the y components of the motion vectors of blocks A, B, C, D, E and G are stacked into the stack memory S72, arranged in the order of magnitude in an arrangement block ST2 into a stack S73, and a median is assessed from the values of the stack, this being the final y component Yout of the motion vector for block E. In the current example, the values X out and Y out are final values presenting the motion between two consecutive frames.

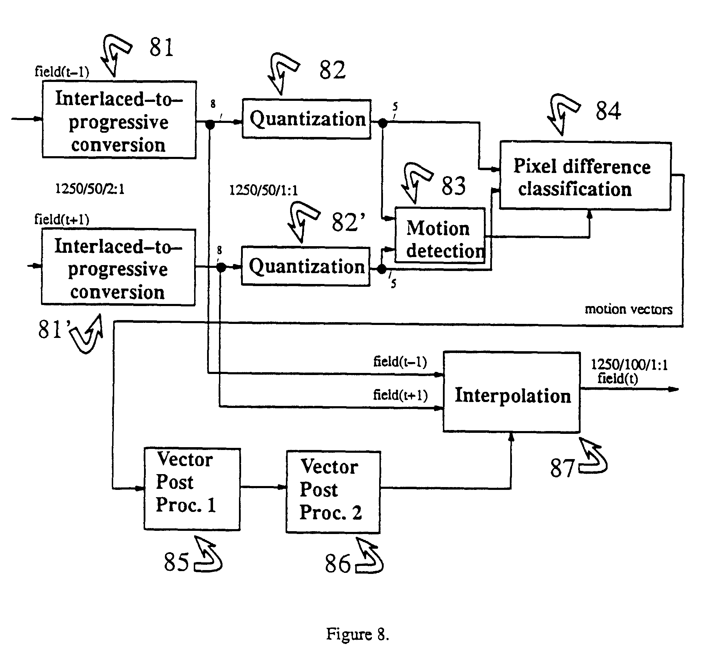

Fig. 8, presenting an application of the invention, illustrates a circuit for field uprate, applied in a video signal according to the HD-MAC standard. An incoming, non-interlaced signal of 50Hz field frequency is first converted into a progressive 50 Hz field frequency frame in Interlaced-to-Progressive Converters 81 and 81'. The conversion can be accomplished motion adaptively, in any manner known in the art, using a DATV signal containing the motion vectors, received along with an HD-MAC signal, and frame displacement and frame-internal interpolation being used in said conversion. If 100 Hz is desired to be the field frequency of the output field and the picture to be progressive, the new field lines have to be interpolated in interpolator block 87. For said purpose, DATV motion vectors cannot be used; instead, new motion vectors are searched using the method of the invention. At the very first phase, the pixels of the progressive pictures are quantized from one with 8 bits e.g. into one with 5 bits, in quantization blocks 82 and 82'. The quantized images are conducted to a motion detection 83 to be examined whether each block contains any motion or not. Thereafter, the motion vectors are searched in block 84 from circular zone to circular zone, as presented in the description of Figs 3 and 4. The result thus obtained is presented in Fig. 4. In an afterprocessing block 85 a consistency operation described in association with Fig. 5 text is accomplished. The final motion vectors of the blocks are obtained in a second afterprocessing block 86 in which the processing according to Fig. 7 is accomplished. The motion vector components X and Y of the blocks obtained for the final result are conducted into an interpolator block 87 which interpolates motion-adaptively a new frame t.

In practice, no complete comparison between the blocks need be carried out in the range of the entire search zone, instead, in studying an area interlacing with a preceding, smaller circular zone the comparative results obtained through studying said smallest area are taken into consideration.

Within the protective scope of the claims, the invention can be implemented in a variety of ways. The search area need not necessarily be circular in shape, instead, it can be e.g. square, rectangular or polygonal. The pixels need not necessarily be quantized, but also the true values can be compared, whereby the absolute differences thereof must be calculated. In the afterprocessing phase of the motion vector candidates, the consistency check can be carried out using also other than median operations.

The motion need not necessarily be studied between two pictures, instead, the pictures to be studied may form a sample sequence in which one or more original pictures can be missing between individual pictures.

## Claims

1. A method for estimating motion between television pictures from a digital video signal, in which method the picture is divided into blocks and in which by using block matching, a matching block is searched from the search area of a subsequent picture (t+1), the contents thereof being equivalent to the contents of the reference block of the preceding picture (t), whereby from the displacement of the matching block relative to the reference block the motion vector for the reference block is obtained, characterized in that for each block of the preceding picture:
- the search area consists of several concentric areas,
- in each area the position of the matching block is searched which provides the best matching block within said area, and the x and y coordinates of said matching block are stored in the memory as the vector components of the motion vector candidate of the reference block, whereby, after finishing the search in each area, as many motion vector candidates per each block have been obtained as there are search areas,
- the motion vector candidates of the reference block and at least of the immediately adjacent blocks thereof are conducted by search area by search area to the first median filters (F1, F2; F3, F4; F5, F6) accomplishing the first filtering operation, whereby the motion vector candidates of the search areas of different blocks corresponding to each other are input to one and same filter, and the output of each filter provides only one filtered motion vector per each search area, and
- the filtered motion vector candidates thus obtained are conducted into a second median filter (F7, F8) accomplishing a second filtering operation, the output thereof providing the final motion vector.

2. Method according to claim 1, characterized in that the search areas are concentric circular areas.

3. Method according to claim 1, characterized in that the block matching is accomplished on quantized samples.

4. Method according to claim 3, characterized in that
- in the block matching, only part of the samples of a matching block are compared with corresponding samples of a reference block, and the number (N) of the matching block samples is counted, the difference of which compared with the corresponding sample of the reference block is smaller than a predetermined threshold value, and
- for the location of a block providing the best matching, the location of the matching block is selected in which the number (N) of the samples thus counted is greatest.

5. Method according to claim 1, characterized in that prior to the motion estimation, a simple motion detection is carried out for the blocks and no motion vectors are searched for stationary blocks.

6. Method according to any one of the preceding claims, characterized in that the final motion vectors of the reference block and at least the immediate adjacent blocks thereof thus obtained in the further processing are conducted to third filters in which a median is calculated, said medians being used for the motion vectors of the reference block.

7. A motion estimator for estimating a motion between television pictures from a digital video signal, to the inputs of which estimator two consecutive pictures (t, t+1) divided into blocks, are conducted simultaneously, and which by using block matching searches a matching block from the search area of a subsequent frame (t+1) which, as regards the contents, is equivalent to the contents of the reference block of the preceding frame (t), and calculates from a displacement of the matching block relative to the reference block a motion vector obtained from the output of the estimator,
characterized in that the motion estimator comprises further
- first means for producing a plurality of concentric search areas,
- means for searching the best matching block in each area and store the x and y coordinates of the matching block in the memory as a motion vector candidate, whereby, after finishing the search in each area, a respective motion vector candidate is stored in the memory for each search area,
- first median filters for carrying out a first median filtering operation (F1, F2, F3, F4, F5, F6) so connected with the memory that the motion vector candidates of the reference block and of the search areas corresponding at least to the adjacent blocks thereof enter each filter, and from the output of each memory one filtered motion vector candidate is obtained, and
- second median filters (F7, F8) carrying out a second median filtering operation, being connected to the output of the first filters, and from the output whereof a final motion vector is being provided.

8. Estimator according to claim 7, characterized in that the search areas provided by the first means are concentric circular areas.

9. Estimator according to claim 7, characterized in that it includes furthermore quantization members for quantizing the incoming samples.

10. Estimator according to claim 7, characterized in that the samples are conducted to a motion detector which accomplished a motion detection for the blocks, the output thereof being connected to other members.

11. Any one of estimators according to claims 7 to 10, characterized in that the output of said second median filter is connected to a third filter and that the third filter are median filters and that they calculate the median from the final motion vectors obtained from the reference block and at least from the immediate adjacent blocks thereof, said medians being provided from the output of the estimator.

## Patentansprüche

1. Verfahren zum Schätzen der Bewegung zwischen Fernsehbildern von einem digitalen Videosignal, bei dem das Bild in Blöcke unterteilt wird und bei dem mit Hilfe von Blockvergleichen nach einem übereinstimmenden Block aus dem Suchbereich eines nachfolgenden Bildes (t+1) gesucht wird, dessen Inhalt mit dem Inhalt des Referenzblockes des vorhergehenden Bildes (t) gleichwertig ist, so daß durch die Verschiebung des übereinstimmenden Blockes relativ zu dem Referenzblock der Bewegungsvektor für den Referenzblock erhalten wird, dadurch gekennzeichnet, daß für jeden Block des vorhergehenden Bildes:
- der Suchbereich aus mehreren konzentrischen Bereichen besteht,
- in jedem Bereich nach der Position des übereinstimmenden Blockes gesucht wird, die den am besten übereinstimmenden Block innerhalb des genannten Bereiches ergibt, und die x-und y-Koordinaten des genannten übereinstimmenden Blockes in dem Speicher als die Vektorkomponenten des Bewegungsvektorkandidaten des Referenzblockes gespeichert werden, so daß nach der Suche in jedem Bereich so viele Bewegungsvektorkandidaten pro Block erhalten werden, wie es Suchbereiche gibt,
- die Bewegungsvektorkandidaten des Referenzblockes und wenigstens der unmittelbar benachbarten Blöcke davon Suchbereich für Suchbereich zu den ersten Medianfiltern (F1, F2; F3, F4; F5, F6) zur Durchführung des ersten Filtervorganges geleitet werden, so daß die Bewegungsvektorkandidaten der Suchbereiche verschiedener Blöcke, die miteinander übereinstimmen, in ein und denselben Filter eingegeben werden, und der Ausgang jedes Filters nur einen gefilterten Bewegungsvektor pro Suchbereich ergibt, und
- die auf diese Weise erhaltenen gefilterten Bewegungsvektorkandidaten in einen zweiten Medianfilter (F7, F8) zur Durchführung eines zweiten Filtervorganges geleitet werden, dessen Ausgang den endgültigen Bewegungsvektor ergibt.

2. Verfahren nach Anspruch 1, dadurch gekennzeichnet, daß die Suchbereiche konzentrische kreisförmige Bereiche sind.

3. Verfahren nach Anspruch 1, dadurch gekennzeichnet, daß der Blockvergleich an quantisierten Proben durchgeführt wird.

4. Verfahren nach Anspruch 3, dadurch gekennzeichnet, daß
- bei dem Blockvergleich nur ein Teil der Proben eines übereinstimmenden Blockes mit entsprechenden Proben eines Referenzblockes verglichen wird und die Anzahl (N) der übereinstimmenden Blockproben gezählt wird, deren Differenz im Vergleich mit der entsprechenden Probe des Referenzblockes kleiner ist als ein vorbestimmter Schwellenwert, und
- für den Ort eines Blockes, der die beste Übereinstimmung ergibt, der Ort des übereinstimmenden Blockes ausgewählt wird, bei dem die Anzahl (N) der so gezählten Proben am größten ist.

5. Verfahren nach Anspruch 1, dadurch gekennzeichnet, daß vor der Bewegungsschätzung eine einfache Bewegungserfassung für die Blöcke durchgeführt wird und keine Bewegungsvektoren nach stationären Blöcken durchsucht werden.

6. Verfahren nach einem der vorherigen Ansprüche, dadurch gekennzeichnet, daß die endgültigen Bewegungsvektoren des Referenzblockes und wenigstens der unmittelbar benachbarten Blöcke davon, die auf diese Weise in der weiteren Bearbeitung erhalten wurden, zu dritten Filtern geleitet werden, bei denen ein Median errechnet wird, wobei die genannten Mediane für die Bewegungsvektoren des Referenzblockes verwendet werden.

7. Bewegungsschätzvorrichtung zum Schätzen einer Bewegung zwischen Fernsehbildern von einem digitalen Videosignal, zu deren Eingängen zwei aufeinanderfolgende Bilder (t, t+1), die in Blöcke unterteilt sind, gleichzeitig geleitet werden, und die mit Hilfe eines Blockvergleiches nach einem übereinstimmenden Block aus dem Suchbereich eines nachfolgenden Vollbildes (t+1) sucht, das im Hinblick auf den Inhalt mit dem Inhalt von dessen Referenzblock des vorhergehenden Vollbildes (t) gleichwertig ist, und aus einer Verschiebung des übereinstimmenden Blockes relativ zu dem Referenzblock einen von dem Ausgang der Schätzvorrichtung erhaltenen Bewegungsvektor errechnet, dadurch gekennzeichnet, daß die Bewegungsschätzvorrichtung ferner folgendes umfaßt:
- ein erstes Mittel zum Erzeugen einer Mehrzahl von konzentrischen Suchbereichen,
- ein Mittel zum Suchen nach dem am besten übereinstimmenden Block in jedem Bereich und zum Speichern der x- und y-Koordinaten des übereinstimmenden Blockes im Speicher als Bewegungsvektorkandidat, so daß nach der Suche in jedem Bereich ein jeweiliger Bewegungsvektorkandidat im Speicher für jeden Suchbereich gespeichert wird,
- erste Medianfilter zum Durchführen eines ersten Medianfiltervorganges (F1, F2, F3, F4, F5, F6), die so mit dem Speicher verbunden sind, daß die Bewegungsvektorkandidaten des Referenzblockes und der Suchbereiche, die wenigstens den benachbarten Blöcken davon entsprechen, in jeden Filter eintreten, und vom Ausgang jedes Speichers ein gefilterter Bewegungsvektorkandidat erhalten wird, und
- zweite Medianfilter (F7, F8) zum Durchführen eines zweiten Medianfiltervorganges, die mit dem Ausgang der ersten Filter verbunden sind und aus deren Ausgang sich ein endgültiger Bewegungsvektor ergibt.

8. Schätzvorrichtung nach Anspruch 7, dadurch gekennzeichnet, daß die durch das erste Mittel bereitgestellten Suchbereiche konzentrische kreisförmige Bereiche sind.

9. Schätzvorrichtung nach Anspruch 7, dadurch gekennzeichnet, daß sie ferner Quantisierungselemente zum Quantisieren der eingehenden Proben beinhaltet.

10. Schätzvorrichtung nach Anspruch 7, dadurch gekennzeichnet, daß die Proben zu einem Bewegungsdetektor geleitet werden, der eine Bewegungserfassung für die Blöcke durchgeführt hat, wobei der Ausgang davon mit anderen Elementen verbunden ist.

11. Eine beliebige der Schätzvorrichtungen nach Anspruch 7 bis 10, dadurch gekennzeichnet, daß der Ausgang des genannten zweiten Medianfilters mit einem dritten Filter verbunden ist und daß der dritte Filter ein Medianfilter ist und daß er den Median von den endgültigen Bewegungsvektoren errechnet, die von dem Referenzblock und wenigstens von den unmittelbar benachbarten Blöcken davon erhalten werden, wobei die genannten Mediane vom Ausgang der Schätzvorrichtung bereitgestellt werden.

## Revendications

1. Procédé d'estimation de mouvement entre des images de télévision à partir d'un signal vidéo numérique, dans lequel l'image est divisée en blocs et dans lequel, en utilisant la mise en correspondance des blocs, un bloc de mise en correspondance est recherché dans la zone de recherche d'une image suivante (t+1), dont le contenu est équivalent au contenu du bloc de référence de l'image précédente (t), grâce à quoi on obtient le vecteur de mouvement pour le bloc de référence à partir du déplacement du bloc de mise en correspondance par rapport au bloc de référence, caractérisé en ce que, pour chaque bloc de l'image précédente :
- la zone de recherche consiste en plusieurs zones concentriques,
- dans chaque zone, on recherche la position du bloc de mise en correspondance qui donne le meilleur bloc de mise en correspondance à l'intérieur de ladite zone, et les coordonnées x et y dudit bloc de mise en correspondance sont stockées dans la mémoire en tant que composantes de vecteur de mouvement possible du bloc de référence, grâce à quoi, après la fin de la recherche dans chaque zone, on a obtenu autant de vecteurs de mouvement possibles pour chaque bloc qu'il y a de zones de recherche,
- les vecteurs de mouvement possibles du bloc de référence et au moins les blocs immédiatement adjacents sont dirigés, grâce à la zone de recherche, jusqu'aux premiers filtres de moyenne (F1, F2, F3, F4, F5, F6) qui effectuent la première opération de filtrage, grâce à quoi les vecteurs de mouvement possibles des zones de recherche des différents blocs qui se correspondent sont entrés dans un seul et même filtre, et la sortie de chaque filtre ne fournit qu'un seul vecteur de mouvement filtré pour chaque zone de recherche, et
- les vecteurs de mouvement possibles filtrés ainsi obtenus sont dirigés vers un deuxième filtre de moyenne (F7, F8) qui effectue une deuxième opération de filtrage, dont la sortie fournit le vecteur de mouvement final.

2. Procédé selon la revendication 1, caractérisé en ce que les zones de recherche sont des zones circulaires concentriques.

3. Procédé selon la revendication 1, caractérisé en ce que la mise en correspondance des blocs est réalisée sur des échantillons quantifiés.

4. Procédé selon la revendication 3, caractérisé en ce que :
- dans la mise en correspondance des blocs, seule une partie des échantillons d'un bloc de mise en correspondance est comparée aux échantillons correspondant d'un bloc de référence, et le nombre (N) des échantillons de bloc de mise en correspondance est compté, et la différence comparée à l'échantillon correspondant du bloc de référence est inférieure à une valeur de seuil prédéterminée, et
- pour l'emplacement d'un bloc fournissant la meilleure mise en correspondance, l'emplacement du bloc de mise en correspondance est choisi de façon que le nombre (N) d'échantillons ainsi compté soit le plus grand.

5. Procédé selon la revendication 1, caractérisé en ce que, avant l'estimation de mouvement, on effectue une simple détection de mouvement pour les blocs et qu'on ne recherche aucun vecteur de mouvement pour les blocs fixes.

6. Procédé selon l'une quelconque des revendications précédentes, caractérisé en ce que les vecteurs de mouvement finaux du bloc de référence et au moins les blocs immédiatement adjacents ainsi obtenus dans le traitement ultérieur sont dirigés vers des troisièmes filtres dans lesquels on calcule un filtre de moyenne, ledit filtre de moyenne étant utilisé pour les vecteurs de mouvement du bloc de référence.

7. Dispositif d'estimation de mouvement permettant d'estimer un mouvement entre des images de télévision à partir d'un signal vidéo numérique, deux images consécutives divisées en blocs étant dirigées simultanément vers les entrées dudit dispositif d'estimation, et qui permet de rechercher, en utilisant la mise en correspondance des blocs, un bloc de mise en correspondance à partir de la zone de recherche d'une trame suivante (t+1) dont le contenu est équivalent au contenu du bloc de référence de la trame précédente (t), et calcule, à partir d'un déplacement du bloc de mise en correspondance par rapport au bloc de référence, un vecteur de mouvement obtenu à partir de la sortie du dispositif d'estimation, caractérisé en ce que le dispositif d'estimation de mouvement comprend en outre :
- des premiers moyens de production d'une pluralité de zones de recherche concentriques,
- des moyens de recherche du meilleur bloc de mise en correspondance dans chaque zone et de stockage des coordonnées x et y du bloc de mise en correspondance dans la mémoire, en tant que vecteur de mouvement possible, grâce à quoi, après la fin de la recherche dans chaque zone, le vecteur de mouvement respectif est stocké dans la mémoire pour chaque zone de recherche,
- des premiers filtres de moyenne (F1, F2, F3, F4, F5, F6), pour effectuer une première opération de filtrage de moyenne, raccordés de telle façon à la mémoire que les vecteurs de mouvement possibles du bloc de référence et des zones de recherche correspondant au moins aux blocs adjacents pénètrent dans chaque filtre, et on obtient un vecteur de mouvement filtré possible à partir de la sortie de chaque mémoire, et,
- des deuxièmes filtres de moyenne (F7, F8) qui effectuent une deuxième opération de filtrage de moyenne, raccordés à la sortie des premiers filtres, et de la sortie desquels un vecteur de mouvement final est fourni.

8. Dispositif d'estimation selon la revendication 7, caractérisé en ce que les zones de recherche fournies par les premiers moyens sont des zones circulaires concentriques.

9. Dispositif d'estimation selon la revendication 7, caractérisé en ce qu'il comporte en outre des éléments de quantification pour quantifier les échantillons entrants.

10. Dispositif d'estimation selon la revendication 7, caractérisé en ce que les échantillons sont dirigés vers un détecteur de mouvement qui a réalisé une détection de mouvement pour les blocs, dont la sortie est raccordée aux autres éléments.

11. L'un quelconque des dispositifs d'estimation selon les revendications 7 à 10, caractérisé en ce que la sortie dudit deuxième filtre de moyenne est raccordée à un troisième filtre et en ce que le troisième filtre consiste en un filtre de moyenne, et en ce que celui-ci calcule la moyenne à partir des vecteurs de mouvement finaux obtenus à partir du bloc de référence et au moins les blocs immédiatement adjacents, lesdites moyennes étant fournies à partir de la sortie du dispositif d'estimation.
